# EUROPEAN PATENT SPECIFICATION

(11) **EP 3 384 543 B1**
(45) Date of publication and mention of the grant of the patent: **10.04.2019**
(21) Application number: 16766401.0
(22) Date of filing: 31.08.2016
(51) Int. Cl.: H01M 4/14, H01M 4/20, H01M 4/62, H01M 10/08, H01M 4/02, H01M 10/06

(54) **NEGATIVE ELECTRODE AND ELECTROLYTIC SOLUTION FOR LEAD-ACID BATTERY, METHOD FOR MANUFACTURING THE SAME, AND LEAD-ACID BATTERY COMPRISING SAID NEGATIVE ELECTRODE OR SAID ELECTROLYTIC SOLUTION**
NEGATIVE ELEKTRODE UND ELEKTROLYTLÖSUNG FÜR BLEISÄUREBATTERIE, VERFAHREN ZUR HERSTELLUNG DERSELBEN, UND BLEISÄUREBATTERIE UMFASSEND DIESE NEGATIVE ELEKTRODE ODER DIESE ELEKTROLYTLÖSUNG
ÉLECTRODE NÉGATIVE ET SOLUTION ÉLECTROLYTIQUE POUR BATTERIE AU PLOMB-ACIDE, LEUR PROCÉDÉ DE PRÉPARATION, ET BATTERIE AU PLOMB-ACIDE COMPRENANT LADITE ÉLECTRODE NÉGATIVE OU LADITE SOLUTION ÉLECTROLYTIQUE

(30) Priority: 09.02.2016 WO PCT/JP2016/000679
(43) Date of publication of application: 10.10.2018
(73) Proprietor: Hitachi Chemical Company, Ltd., Chiyoda-ku Tokyo 100-6606 (JP)
(72) Inventor: DETCHKOV, Detchko Pavlov, Sofia 1113 (BG); NAIDENOV, Vesselin Bojidarov, Sofia 1113 (BG); VASSILEV, Sasho Vassilev, Sofia 1113 (BG); MILUSHEVA, Yovka Dineva, Sofia 1113 (BG); SHIBAHARA, Toshio, Tokyo 100-6606 (JP); MINOURA, Satoshi, Tokyo 100-6606 (JP)
(74) Representative: Hoffmann Eitle
(86) International application number: PCT/JP2016/003974
(87) International publication number: WO 2017/138045

(56) References cited:
- EP-A1- 2 214 235
- JP-A- H0 465 062
- JP-A- H02 162 649
- P. GHIMIRE ET AL: "Suppression of electrochemical decomposition of electrolyte in lithium ion batteries: an electrolyte containing an acetate group", ITE LETTERS ON BATTERIES, NEW TECHNOLOGIES & MEDICINE, vol. 6, no. 1, 20 March 2005 (2005-03-20), pages 16-19, XP001512462, ISSN: 1531-2046

## Description

### Technical Field

This invention relates to a negative electrode for a lead-acid battery, a lead-acid battery and a method for manufacturing a negative electrode for a lead-acid battery.

### Background Art

Current development of electrical energy storage technology demands lead-acid batteries with high performance characteristics. The basic user requirements for lead-acid batteries include: long service life, high reliability, minimum maintenance or maintenance-free service and sufficiently high energy return factor throughout their service life.

Contemporary lead-acid batteries, as one of the most widely used secondary energy sources, have a number of advantages that make them the preferred choice compared to other secondary power source chemistries. The major advantages of lead-acid batteries include: low production costs, reliable technology of battery manufacture and maintenance, high acceptable upper limits of the charge and discharge currents, in mass production for a long time now and fully recyclable.

However, despite their merits, lead-acid batteries have some disadvantages as well which currently limit the fields of their possible application. In most general terms, these deficiencies can be summarized as follows: short shelf life in a discharged state, low specific energy, limited cycle life under deep discharge conditions, and low capacity when operated at low temperatures.

One possible approach to overcome the above deficiencies of lead-acid batteries is to improve the negative active mass structure and properties, and thus enhance the performance characteristics of the batteries.

The processes that occur during manufacture of positive and negative pastes for lead-acid batteries are described by Barnes and Mathieson (Non-Patent Literature 1). These authors have established that the main components of the active materials used for the manufacture of the two electrodes of a lead-acid battery are tribasic lead sulphate, lead oxide and metallic lead contained in the initial lead oxides. The performance of the various types of lead-acid batteries depends mostly on the composition and the technology of preparation of the active masses.

The initial materials used for the production of negative battery pastes include: lead oxide powder, H₂O, H₂SO₄ in concentrations within the range from 1.20 to 1.40 g/cm³, expander mix, including: lignosulfonate, barium sulfate and carbon black or other carbon materials, and inhibitors.

The chemical processes that proceed during manufacture of the active masses can be described by the following equations:

8PbO + 4H₂SO₄ ⇔ 4(PbO • PbSO₄) + 4H₂O

6(PbO • PbSO₄) + 2H₂O ⇔ 2(3PbO • PbSO₄ • H₂O) + 4PbSO₄

4PbO + H₂SO₄ ⇔ 3PbO • PbSO₄.H₂O

tet-PbO ⇔ ort-PbO

The high energy return coefficient (energy efficiency) and long service life of lead-acid batteries depend not only on the physical and mechanical properties of the pastes, but also on the compounds and additives they contain (Non-Patent Literature 2). The phase composition of the negative active materials determines the energetic characteristics of the lead-acid batteries produced (Non-Patent Literatures 2 and 3). There are a number of technical papers published in the international literature which report experimental data on the effect of various additives to the negative active materials on the electrochemical processes of charge and discharge on cycling of lead-acid batteries.

Different additives are proposed to improve the performance parameters of batteries for different applications such as starter (SLI), traction, and stationary photovoltaic batteries.

One proposed approach is to add to the negative active materials substances that limit the physical and mechanical changes of the electrodes during battery operation. For example, Patent Literature 1 suggests that Teflon powder is added to the active materials in concentrations from 0.001% to 0.5% by weight. This patent claims that Teflon added to the positive plates prolongs their cycle life, while when added to the negative active mass, it improves the capacity of the battery when operated at low temperatures. The authors of Patent Literature 2 propose that glass fibres with a starch coating are added to the negative active mass to improve the mechanical strength of the electrodes. Patent Literature 3 claims that polymer fibres (milled glass fibres), added to the negative paste material in an amount up to 6.55% of the leady oxide, improve the mechanical strength of the active mass.

In line with the above approach, Patent Literature 4 suggests addition of polyvinylchloride fibres to the active masses, again with the aim of improving their mechanical strength during battery operation. Patent Literature 5 protects the technology of introducing polymer organic substances that interconnect to form a network in the negative active mass and also decrease the mechanical shrinkage of the electrodes.

The second major approach is to introduce chemical substances into the negative active masses with the aim of improving the electrical conductivity of the electrodes on the one hand and, on the other hand, of inhibiting their sulfation during battery cycling. To this aim, namely to reduce shrinkage of the negative electrodes on cycling and to improve their electro-conductivity, Patent Literature 6 proposes a negative paste composition containing a mixture of polymer and carbon black. Patent Literature 7 suggests addition of various carbon and silicon materials to the negative pastes with the purpose of inhibiting the sulfation of the negative electrodes during battery operation.

Patent Literatures 8 and 9 disclose negative electrode compositions for lead-acid batteries, comprising an aromatic compound as additive, such as an aryl sulfonic acid (PTL 8) or 2-mercaptobenzimidazole (PTL 9).

### Citation List

### Patent Literature

PTL 1: US Pat. No. 4,130,695
PTL 2: US Pat. No. 4,238,557
PTL 3: US Pat. No. 4,323,470
PTL 4: RU Pat. No. 2,454,756
PTL 5: EP Pat. No. 1,318,556
PTL 6: US Pat. No. 6,733,547
PTL 7: US Pat. No. 9,112,231
PTL 8 : JP H04 65062 A
PTL 9 : JP H02 162649 A

### Non Patent Literature

NPL 1: Barnes S.A., Mathieson R.T., Batteries, vol. 2, Perg. Press, 1965, p. 41-45.
NPL 2: D.A.J. Rand, R.M. Dell, Batteries for Electric Vehicles Research Studies, Press, Taunton, UK, 1998.
NPL 3: D. Pavlov Lead-Acid Batteries: Science and Technology, Elsevier, 2011

### Summary of Invention

### Technical Problem

An object of the present invention is to provide a lead-acid battery exhibiting excellent cycle characteristics, a negative electrode of the lead-acid battery, and a manufacturing method thereof.

### Solution to Problem

In one aspect, the present invention provides a negative electrode for a lead-acid battery comprising: a negative electrode collector; and a negative electrode material comprising an aromatic ester compound.

In another aspect, the present invention provides a lead-acid battery comprising the above negative electrode.

In another aspect, the present invention provides a method for manufacturing a negative electrode for a lead-acid battery, comprising the step of filling a negative electrode collector with a negative electrode material comprising an aromatic ester compound.

A content of the aromatic ester compound can be 0.01 to 5.0 % by mass based on the total amount of the negative electrode material.

The negative electrode material can further comprise a carbon material.

The carbon material can be at least one selected from the group consisting of carbon blacks, graphites and active carbons.

The negative electrode material can further comprise a resin having at least one group selected from the group consisting of sulfone groups and sulfonate groups.

The aromatic ester compound can be at least one selected from the group consisting of benzyl benzoate and derivatives thereof.

In another aspect, the present invention provides an additive for a negative electrode for a lead-acid battery, comprising an aromatic ester compound.

In another aspect, the present invention provides use of an aromatic ester compound for a negative electrode material for a lead-acid battery.

In another aspect, the present invention provides an electrolytic solution for a lead-acid battery, comprising: sulfuric acid; and an aromatic ester compound.

In another aspect, the present invention provides a lead-acid battery comprising the above electrolytic solution.

In another aspect, the present invention provides a method for manufacturing an electrolytic solution for a lead-acid battery, comprising the step of adding an aromatic ester compound to sulfuric acid solution.

A content of the aromatic ester compound can be 0.01 to 5.0 % by volume based on the total amount of the electrolytic solution.

The aromatic ester compound can be at least one selected from the group consisting of benzyl benzoate and derivatives thereof.

In another aspect, the present invention provides an additive for an electrolytic solution for a lead-acid battery, comprising an aromatic ester compound.

In another aspect, the present invention provides use of an aromatic ester compound for an electrolytic solution for a lead-acid battery.

The aromatic ester compounds can achieve excellent cycle characteristics of the lead-acid battery when added to the electrolytic solution as well as to the negative electrode material. It can be thought that the aromatic ester compounds added to the electrolytic solution transfer to the negative electrode active material, adsorb onto lead sulfate generated by discharge reaction, make the particles fine, and then promote charge reaction.

### Advantageous Effects of Invention

According to the present invention, it is possible to provide a lead-acid battery exhibiting excellent cycle characteristics, a negative electrode of the lead-acid battery, and a manufacturing method thereof.

### Brief Description of Drawings

Fig. 1 is a graph for explaining the charge and discharge pattern of HRPSOC cycle.
Fig. 2 is a graph for explaining the evaluation criteria of HRPSOC cycle characteristics.

### Description of Embodiments

Hereinafter, embodiments of the present invention are described in detail.

### <Lead-acid battery>

The lead-acid battery according to the present embodiment, for example, contains a positive electrode (positive electrode plate or the like), a negative electrode (negative electrode plate or the like), an electrolytic solution, and a separator, which are accommodated in a battery case. Examples of the lead-acid battery may contain a flooded-type lead-acid battery and a valve-regulated lead-acid battery.

### (Negative electrode)

The negative electrode contains a collector (negative electrode collector) and a negative electrode material retained in the collector. The negative electrode according to the present embodiment contains both a negative electrode after formation, which is for example, in fully charged state, (formed negative electrode) and a negative electrode before formation (unformed negative electrode).

### (Collector)

The collector is one that constitutes an electrically conductive path for a current from the electrode material (negative electrode material), and it may have the same configuration as the collector in a conventional lead-acid battery. Specifically, the collector may be formed of a material such as a lead-calcium-tin-based alloy or a lead-antimony-based alloy. A trace amount of selenium, silver, bismuth, or the like may be added to these materials. The collector is obtained by a manufacturing method such as a casting method or an expanding method.

### (Negative electrode material)

The formed negative electrode material contains, for example, a formed negative electrode active material and an additive (negative electrode additive). In some embodiments, the additive contains at least an aromatic ester compound. Examples of the formed negative electrode active material may contain spongy lead and the like.

The formed negative electrode material is obtained by curing and drying a negative electrode material paste containing a raw material for the negative electrode active material and the additive (negative electrode additive) to obtain a negative electrode material before formation (unformed negative electrode material) and then form the unformed negative electrode material. In some embodiments, the unformed negative electrode material may contain, for example, basic lead sulfate, metallic lead, lead monoxide, and a negative electrode additive containing at least an aromatic ester compound.

Examples of the raw material for the negative electrode active material may contain leady oxide and the like. Examples of the leady oxide may contain leady oxide (a mixture of powder containing PbO as the main component and flake-shaped metallic lead in the case of a ball mill type leady oxide manufacturing machine) that is manufactured using a ball mill type leady oxide manufacturing machine or the Burton pot type leady oxide manufacturing machine.

The content of the negative electrode active material is preferably 93% by mass or more, more preferably 95% by mass or more, and even more preferably 98% by mass or more, based on the total mass of the negative electrode material, from the viewpoint of exhibiting superior battery characteristics.

In some embodiments, the negative electrode additive contains at least an aromatic ester compound. The aromatic ester compound may have an aromatic ring in the molecule and an ester structure, and for example, it may be an ester of an aromatic carboxylic acid and an alcohol such as an aliphatic alcohol, an ester of a carboxylic acid such as an aliphatic carboxylic acid and an aromatic alcohol, or an ester of an aromatic carboxylic acid and an aromatic alcohol. The aromatic ester compound is preferably an ester of an aromatic carboxylic acid and an aromatic alcohol.

The aromatic ester compound is more preferably benzyl benzoate or a derivative of benzyl benzoate. Benzyl benzoate or a derivative of benzyl benzoate is, for example, represented by the following Formula (1).

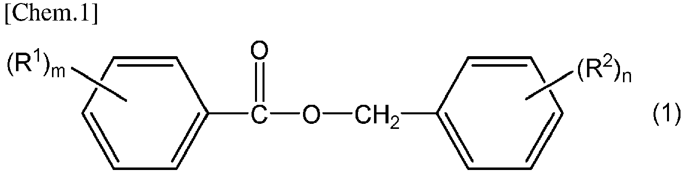

In Formula (1), R¹ and R² each independently represent a halogen atom, a hydrocarbon group having from 1 to 10 carbon atoms, an alkoxy group having from 1 to 10 carbon atoms, an amino group, a hydroxyl group, or a sulfone group, and m and n each independently represent an integer from 0 to 5.

The aromatic ester compound is even more preferably benzyl benzoate (a compound represented by Formula (1) in which both of m and n are 0).

The content of the aromatic ester compound is preferably 0.01% by mass or more, more preferably 0.1% by mass or more, and even more preferably 0.2% by mass or more and preferably 5% by mass or less, more preferably 1% by mass or less, and even more preferably 0.5% by mass or less, based on the total mass of the negative electrode material. The content of the aromatic ester compound is preferably from 0.01 to 5% by mass, from 0.01 to 1% by mass, from 0.01 to 0.5% by mass, from 0.1 to 5% by mass, from 0.1 to 1% by mass, from 0.1 to 0.5% by mass, from 0.2 to 5% by mass, from 0.2 to 1% by mass, or from 0.2 to 0.5% by mass, based on the total mass of the negative electrode material.

The negative electrode additive may further contain other additives in addition to the aromatic ester compound. Examples of other additives may include a resin having a sulfone group and/or a sulfonic acid salt group, barium sulfate, a carbon material (carbonaceous electrically conductive material), and a short fiber for reinforcement.

Examples of the resin having a sulfone group and/or a sulfonic acid salt group may include a bisphenol-based resin (hereinafter, simply referred to as the bisphenol-based resin) having a sulfone group and/or a sulfonic acid salt group, lignosulfonic acid, a lignosulfonic acid salt, a partially desulfonated lignosulfonic acid salt. Among these, a bisphenol-based resin and a partially desulfonated lignosulfonic acid salt are preferably used from the viewpoint of further improving charge acceptability. The bisphenol-based resin is preferably a bisphenol-based resin that is a condensate of a bisphenol-based compound, at least one kind selected from the group consisting of an aminoalkylsulfonic acid, a derivative of an aminoalkylsulfonic acid, an aminoarylsulfonic acid, and a derivative of an aminoarylsulfonic acid, and at least one kind selected from the group consisting of formaldehyde and a derivative of formaldehyde.

The bisphenol-based resin preferably has at least either of a structural unit represented by the following Formula (2) or a structural unit represented by the following Formula (3).

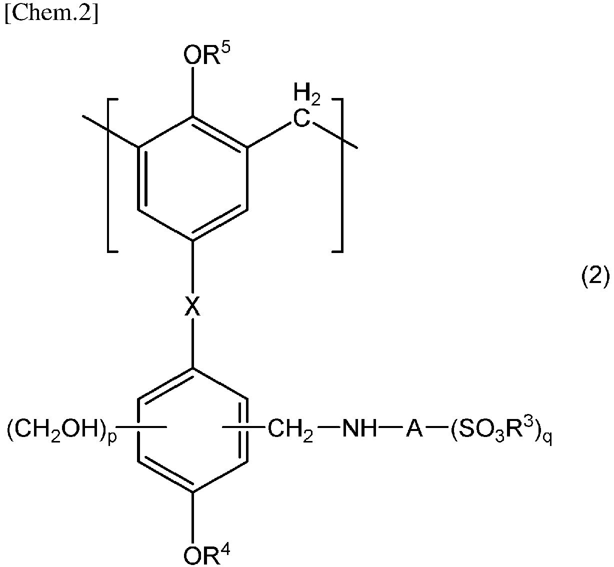

In Formula (2), X represents a divalent group, A represents an alkylene group having from 1 to 4 carbon atoms or an arylene group, R³, R⁴, and R⁵ each independently represent an alkali metal or a hydrogen atom, p represents 0 or 1, and q represents an integer from 1 to 3. The hydrogen atoms bonded to the carbon atoms constituting the benzene ring may be substituted with an alkyl group having from 1 to 5 carbon atoms.

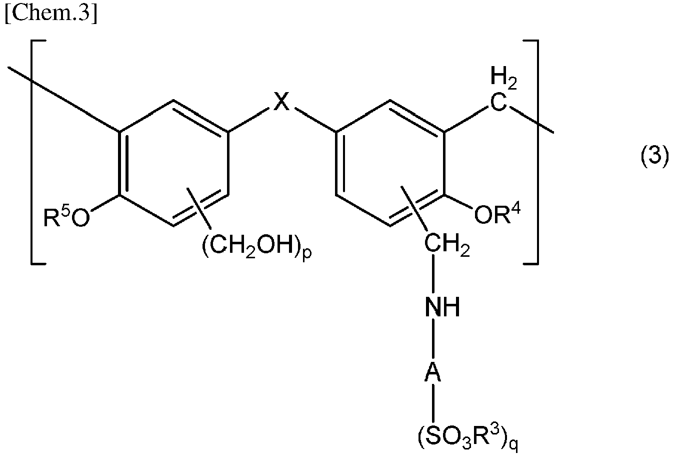

In Formula (3), X, A, R³, R⁴, R⁵, p, and q are synonymous with X, A, R³, R⁴, R⁵, p, and q in Formula (2), respectively. The hydrogen atoms bonded to the carbon atoms constituting the benzene ring may be substituted with an alkyl group having from 1 to 5 carbon atoms.

Examples of X may contain an organic group such as an alkylidene group (a methylidene group, an ethylidene group, an isopropylidene group, a sec-butylidene group, or the like), a cycloalkylidene group (a cyclohexylidene group or the like), a phenylalkylidene group (a diphenylmethylidene group, a phenylethylidene group, or the like) and a sulfonyl group. X is preferably an isopropylidene group (-C(CH₃)₂-) from the viewpoint of exhibiting superior charge acceptability, and X is preferably a sulfonyl group (-SO₂-) from the viewpoint of exhibiting superior discharge characteristics. The above groups represented by X may be substituted with a halogen atom such as a fluorine atom. The hydrocarbon ring may be substituted with an alkyl group or the like in a case in which X is a cycloalkylidene group.

Examples of A may include an alkylene group having from 1 to 4 carbon atoms such as a methylene group, an ethylene group, a propylene group, or a butylene group and a divalent arylene group such as a phenylene group or a naphthylene group. The arylene group may be substituted with an alkyl group or the like.

Examples of the alkali metal represented by R³, R⁴, and R⁵ may include sodium and potassium.

p is appropriately selected depending on the manufacturing conditions, but p is preferably 0 from the viewpoint of exhibiting superior cycle characteristics and storage stability of the bisphenol-based resin. q is preferably 1 or 2 and more preferably 1 from the viewpoint of improving cycle characteristics, discharge characteristics, and charge acceptability in a good balance.

The ratio of the structural unit represented by Formula (2) to the structural unit represented by Formula (3) in the bisphenol-based resin is not particularly limited, and it is appropriately selected depending on the synthetic conditions and the like. The bisphenol-based resin may have only the structural unit represented by Formula (2) or only the structural unit represented by Formula (3).

The number of the structural unit represented by Formula (2) and the number of the structural unit represented by Formula (3) contained in the bisphenol-based resin is preferably from 1 to 150 and more preferably from 10 to 150, respectively, from the viewpoint of exhibiting superior cycle characteristics and solubility in a solvent.

Examples of the lignosulfonic acid salt or the partially desulfonated lignosulfonic acid salt may include an alkali metal salt of lignosulfonic acid or partially desulfonated lignosulfonic acid. Examples of the alkali metal may include sodium and potassium. A partially desulfonated lignosulfonic acid salt is commercially available as the VANILLEX N (trade name, manufactured by Nippon Paper Industries Co., Ltd.) or Vanisperse A (trade name, manufactured by Borregaard LignoTech).

The weight average molecular weight of the resin having a sulfone group and/or a sulfonic acid salt group is preferably 1000 or more, more preferably 3000 or more, even more preferably 10000 or more, and even more preferably 20000 or more from the viewpoint of suppressing the elution of the resin having a sulfone group and/or a sulfonic acid salt group from the electrode into the electrolytic solution in the lead-acid battery and improving the cycle characteristics. The weight average molecular weight of the resin having a sulfone group and/or a sulfonic acid salt group is preferably 80000 or less, more preferably 70000 or less, and even more preferably 60000 or less from the viewpoint of suppressing a decrease in dispersibility due to a decrease in adsorptivity to the electrode active material and improving the cycle characteristics.

The weight average molecular weight of the resin having a sulfone group and/or a sulfonic acid salt group can be measured, for example, by gel permeation chromatography (GPC) under the following conditions.

### (GPC conditions)

Equipment: High performance liquid chromatography system LC-2200 Plus (manufactured by JASCO Corporation)
Pump: PU-2080
Differential refractometer: RI-2031
Detector: UV-visible spectrophotometer UV-2075 (λ: 254 nm)
Column oven: CO-2065
Column: TSKgel SuperAW (4000), TSKgel SuperAW (3000), and TSKgel SuperAW (2500) (manufactured by TOSOH CORPORATION)
Column temperature: 40°C
Eluent: methanol solution containing LiBr (10 mM) and triethylamine (200 mM)
Flow rate: 0.6 mL/minute and
Molecular weight standard samples: polyethylene glycol (molecular weight: 1.10 × 10⁶, 5.80 × 10⁵, 2.55 × 10⁵, 1.46 × 10⁵, 1.01 × 10⁵, 4.49 × 10⁴, 2.70 × 10⁴, and 2.10 × 10 ⁴; manufactured by TOSOH CORPORATION), diethylene glycol (molecular weight: 1.06 × 10²; manufactured by Kishida Chemical Co., Ltd.), and di-butyl hydroxytoluene (molecular weight: 2.20× 10²; manufactured by Kishida Chemical Co., Ltd.)

The content (in terms of resin solid content) of the resin having a sulfone group and/ or a sulfonic acid salt group is preferably from 0.01 to 2.0% by mass, more preferably from 0.05 to 1.0% by mass, even more preferably from 0.1 to 0.5% by mass, and even more preferably from 0.1 to 0.3% by mass, based on the total mass of the negative electrode material.

The content of barium sulfate is preferably from 0.01 to 2.0% by mass and more preferably from 0.3 to 2.0% by mass, based on the total mass of the negative electrode material.

Examples of the carbon material may include carbon black, graphite, and activated carbon. Examples of carbon black may include furnace black, channel black, acetylene black, and thermal black. The content of the carbon material is preferably from 0.1 to 3% by mass and more preferably from 0.2 to 1.4% by mass, based on the total mass of the negative electrode material.

Examples of the short fiber for reinforcement may include an acrylic fiber, a polyethylene fiber, a polypropylene fiber, a polyethylene terephthalate fiber, and a carbon fiber. The content of the short fiber for reinforcement is preferably from 0.05 to 0.3% by mass based on the total mass of the negative electrode material.

### (Positive electrode)

The positive electrode contains a collector (positive electrode collector) and a positive electrode material retained in the collector. The positive electrode according to the present embodiment contains both of a positive electrode after formation, which is for example, in fully charged state, (formed positive electrode) and a positive electrode before formation (unformed positive electrode).

As the positive electrode collector, those which are the same as the negative electrode collector described above are used. The positive electrode collector may be the same or different from the negative electrode collector.

The formed positive electrode material contains a formed positive electrode active material. The formed positive electrode active material preferably contains β-lead dioxide (β-PbO₂) and may further contain α-lead dioxide (α-PbO₂).

The formed positive electrode material is obtained by curing and drying a positive electrode material paste containing a raw material for the positive electrode active material to obtain an unformed positive electrode material and then forming the unformed positive electrode material. The unformed positive electrode material preferably contains an unformed positive electrode active material containing a tribasic lead sulfate as the main component.

Examples of the raw material for the positive electrode active material may include leady oxide. Examples of the leady oxide may include leady oxide (a mixture of powder containing PbO as the main component and flake-shaped metallic lead in the case of a ball mill type leady oxide manufacturing machine) that is manufactured using a ball mill type leady oxide manufacturing machine or the Burton pot type leady oxide manufacturing machine. As the raw material for the positive electrode active material, red lead (Pb₃O₄) may be used.

The content of the positive electrode active material is preferably 95% by mass or more, more preferably 97% by mass or more, and even more preferably 99% by mass or more, based on the total mass of the positive electrode material from the viewpoint of exhibiting superior battery characteristics.

The positive electrode material may further contain an additive (positive electrode additive). Examples of the additive may include a carbon material (carbonaceous electrically conductive material) and a short fiber for reinforcement.

Examples of the carbon material may include carbon black and graphite. Examples of carbon black may include furnace black (Ketjen black or the like), channel black, acetylene black, and thermal black. The content of the carbon material is preferably from 0.1 to 3% by mass and more preferably from 0.2 to 1.4% by mass based on the total mass of the positive electrode material.

Examples of the short fiber for reinforcement may include an acrylic fiber, a polyethylene fiber, a polypropylene fiber, a polyethylene terephthalate fiber, and a carbon fiber. The content of the short fiber for reinforcement is preferably from 0.005 to 0.3% by mass and more preferably from 0.05 to 0.3% by mass, based on the total mass of the positive electrode material.

### (Electrolytic solution)

The electrolytic solution contains, for example, sulfuric acid. The electrolytic solution may further contain a metal ion such as an aluminum ion or a lithium ion.

The specific gravity of the electrolytic solution is preferably 1.24 or more, more preferably 1.25 or more, and even more preferably 1.26 or more from the viewpoint of exhibiting superior discharge characteristics as well as of suppressing the penetration short circuit or freezing. The specific gravity of the electrolytic solution is preferably 1.33 or less, more preferably 1.30 or less, and even more preferably 1.29 or less from the viewpoint of further improving charge acceptability and cycle characteristics. The specific gravity in the present invention means a specific gravity that is converted to a value at 20°C, and it can be measured, for example, using a float type hydrometer or the digital hydrometer manufactured by KYOTO ELECTRONICS MANUFACTURING CO., LTD..

In some embodiments, the electrolytic solution contains an aromatic ester compound. That is, an additive for the electrolytic solution containing the aromatic ester compound can be used. Preferred embodiments of the aromatic ester compound are the same as those described in the explanation of the negative electrode.

The content of the aromatic ester compound is preferably 0.01% by volume or more, more preferably 0.05% by volume or more, even more preferably 0.1% by volume or more, and particularly preferably 0.2% by volume or more, based on the total volume of the electrolytic solution. The content of the aromatic ester compound is preferably 5% by volume or less, more preferably 2% by volume or less, even more preferably 1% by volume or less, particularly preferably 0.8% by volume or less, and most preferably 0.5% by volume or less, based on the total volume of the electrolytic solution. The content of the aromatic ester compound is preferably from 0.01 to 5% by volume, from 0.01 to 2% by volume, from 0.01 to 1% by volume, from 0.05 to 5% by volume, from 0.05 to 2% by volume, from 0.05 to 1% by volume, from 0.1 to 5% by volume, from 0.1 to 2% by volume, from 0.1 to 1% by volume, from 0.1 to 0.8% by volume, from 0.1 to 0.5% by volume, or from 0.2 to 0.5% by volume, based on the total volume of the electrolytic solution.

### (Separator)

Examples of the separator may include a microporous polyethylene sheet and a non-woven fabric composed of a glass fiber and a synthetic resin. It is possible to use a retainer mat composed of a glass fiber non-woven fabric or an organic fiber non-woven fabric as a separator in the valve-regulated lead-acid battery.

### (Battery case)

The battery case is constituted so as to be able to accommodate the electrode and the like therein. The battery case is preferably equipped with a housing having an open upper surface and a lid covering the upper surface of the housing from the viewpoint of easily accommodating the electrode and the like. For the adhesion between the housing and the lid, an adhesive, heat welding, laser welding, ultrasonic welding, or the like is appropriately used. The battery case is preferably formed in a rectangular parallelepiped shape, for example, from the viewpoint of being able to suitably accommodate the electrode plate having a plate shape.

The battery case is required to be formed of a material exhibiting resistance to the electrolytic solution (dilute sulfuric acid or the like). Specifically, the battery case is formed of PP (polypropylene), PE (polyethylene), an ABS (acrylonitrile-butadiene-styrene) resin, or the like. PP is excellent in acid resistance and cost, and PP is also excellent in processability, for example, that heat sealing between the housing and the lid is easier as compared to a case in which the battery case is formed of an ABS resin.

In a case in which the battery case is constituted by the housing and the lid, the housing and the lid may be formed of the same material as or different materials from each other, but they are preferably formed of materials which have an identical thermal expansion coefficient to each other from the viewpoint of being able to suppress the stress.

### <Method for manufacturing lead-acid battery>

The method for manufacturing a lead-acid battery according to the present embodiment contains, for example, an electrode manufacturing step of obtaining electrodes (positive electrode and negative electrode) and an assembling step of obtaining a lead-acid battery by assembling the constituent members containing the electrodes.

In the electrode manufacturing step, for example, the positive electrode material paste and the negative electrode material paste are filled in a collector (for example, cast lattice-shaped or expanded lattice-shaped collector), respectively, and then cured and dried to obtain the positive electrode and the negative electrode that are not formed.

The positive electrode material paste contains, for example, a raw material (leady oxide or the like) for a positive electrode active material, and it may further contain other additives. The positive electrode material paste is obtained, for example, by adding the positive electrode additive (short fiber for reinforcement and the like) and water to the raw material for the positive electrode active material, subsequently adding dilute sulfuric acid thereto, and then kneading the mixture. This positive electrode material paste is filled in the collector and then cured and dried to obtain a positive electrode that is not formed. Red lead (Pb₃O₄) may be used as the raw material for the positive electrode active material from the viewpoint of being able to shorten the time for formation.

Curing for obtaining an unformed positive electrode is preferably conducted for from 15 to 60 hours in an atmosphere having a temperature of from 35 to 85°C and a humidity of from 50 to 98 RH%. Drying is preferably conducted at a temperature of from 45 to 80°C for from 15 to 30 hours.

In some embodiments, the negative electrode material paste contains, for example, a raw material (leady oxide or the like) for the negative electrode active material and an aromatic ester compound, it preferably contains a resin having a sulfone group and/or a sulfonic acid salt group, and it may further contain other additives. In some embodiments, the negative electrode material paste is obtained, for example, by adding the negative electrode additive containing the aromatic ester compound and water to the raw material for the negative electrode active material, subsequently adding dilute sulfuric acid thereto, and then kneading the mixture. In the step of adding the negative electrode additive containing the aromatic ester compound and water, it is preferable that, first, the negative electrode additive other than the aromatic ester compound and water are added to the raw material for the negative electrode active material and the mixture is kneaded, subsequently an aqueous solution or dispersion of the aromatic ester compound prepared by dissolving or dispersing the aromatic ester compound in a proper amount of water is added thereto and the mixture is further kneaded.

Curing for obtaining an unformed negative electrode is preferably conducted for from 15 to 30 hours in an atmosphere having a temperature of from 45 to 65°C and a humidity of from 70 to 98 RH%. Drying is preferably conducted at a temperature of from 45 to 75°C for from 15 to 30 hours.

In the assembling step, for example, the unformed negative electrode and the unformed positive electrode that are obtained in the electrode manufacturing step are alternately laminated via a separator, and the collector portions of the electrode having the same polarity are connected (welding or the like) to one another with a strap to obtain an electrode group. This electrode group is disposed in the battery case to fabricate an unformed battery. Next, the electrolytic solution (diluted sulfuric acid) is injected into the unformed battery, and a direct current is applied thereto to form the unformed battery in the battery case. Thereafter, the specific gravity of the electrolytic solution in the battery after the formation is adjusted to a proper specific gravity if necessary, whereby a lead-acid battery is obtained.

The conditions for formation and the specific gravity of sulfuric acid may be adjusted depending on the nature of the electrode active material. The formation treatment may not be necessarily conducted after the assembling step, but it may be conducted, for example, after curing and drying in the electrode manufacturing step (called tank formation).

In some embodiments, the aromatic ester compound is added to the sulfuric acid solution with the above mentioned content to obtain the electrolytic solution. The aromatic ester compound may be added to the sulfuric acid solution at any time. For example, the aromatic ester compound may be added to the sulfuric acid solution to obtain electrolytic solution to form unformed electrodes, to be injected to formed battery or to form unformed batteries. Alternatively, the aromatic ester compound may be added to the sulfuric acid solution in formed battery which is fabricated in a conventional manner and contains no aromatic ester compound. In this case, the desired effect can be obtained by repeating charge and discharge of the battery.

### Examples

### (Example 1)

### (Fabrication of positive electrode plate)

Leady oxide and red lead (Pb₃O₄) were used as the raw material for the positive electrode active material (leady oxide : red lead = 96 : 4 (mass ratio)). The raw material for the positive electrode active material, the short fiber for reinforcement (acrylic fibers), and a moderate amount of water were kneaded together. The short fiber for reinforcement was used in an amount to be 0.07% by mass based on the total mass of the positive electrode material after formation. Subsequently, the kneaded mixture was further kneaded while adding a moderate amount of dilute sulfuric acid (specific gravity: 1.280) little by little, thereby obtaining a positive electrode material paste.

The positive electrode material paste thus obtained was filled in the casting type collector (dimensions: height of 6.0 cm, width of 5.7 cm, and thickness of 2 mm) made of lead alloy. Subsequently, the collector filled with the positive electrode material paste was cured for 20 hours in an atmosphere having a temperature of 50°C and a humidity of 98%. Thereafter, the resultant was dried at a temperature 60°C for 24 hours, thereby fabricating an unformed positive electrode plate.

### (Fabrication of negative electrode plate)

The Barton pot type leady oxide which had a degree of oxidation of 76% and was manufactured by MONBAT Plc. was used as the raw material for the negative electrode active material. Subsequently, 0.4% by mass of barium sulfate, 0.4% by mass of carbon black (trade name: Vulcan XC-72 manufactured by Cabot Corporation, DBP oil absorption: 174 mL/100 g), and 0.2% by mass of partially desulfonated sodium lignosulfonate) (trade name: Vanisperse A manufactured by Borregaard LignoTech) were added to the leady oxide, and they were then dry mixed (the content was a content based on the total mass of the negative electrode material). Next, water to be 5% by mass based on the total mass of the negative electrode material was added to the mixture and then kneaded together. Subsequently, water to be 4.7% by mass and benzyl benzoate to be 0.3% by mass based on the total mass of the negative electrode material were added thereto in a mixed state, and further kneaded together. Thereafter, the kneaded mixture was further kneaded while adding dilute sulfuric acid (specific gravity: 1.4) to be 9.3% by mass based on the total mass of the negative electrode material little by little, thereby obtaining a negative electrode material paste. Incidentally, the temperature was adjusted such that the temperature of the negative electrode material paste did not exceed 40°C during kneading of the negative electrode material paste.

The negative electrode material paste thus obtained was filled in the casting type collector (dimensions: height of 6.0 cm, width of 5.7 cm, and thickness of 2 mm) made of lead alloy. Subsequently, the collector filled with the negative electrode material paste was cured for 48 hours in an atmosphere having a temperature of 35°C and a humidity of 98%. Thereafter, the resultant was dried at a temperature 60°C for 24 hours, thereby fabricating an unformed negative electrode plate.

### (Assembly of battery)

The unformed positive electrode plate and the unformed negative electrode plate were connected in parallel so as to have the same number, and the resultant was formed in a great excess amount of sulfuric acid (specific gravity: 1.06) for 36 hours. The charged electricity quantity for formation was set to be 200% of the theoretical electricity quantity for formation of the positive electrode. The positive electrode plate and the negative electrode plate after the formation were washed for 2 hours in running water and dried at 60°C in a nitrogen gas atmosphere, thereby obtaining a formed positive electrode plate and a formed negative electrode plate. Using this formed positive electrode plate and this formed negative electrode plate, a flooded-type lead-acid battery and a valve-regulated lead-acid battery were fabricated according to the following procedure.

### <Fabrication of flooded-type lead-acid battery>

The formed negative electrode plate was inserted into a separator which was processed into a bag shape, had a thickness of 0.22 mm, and was made of polyethylene. Next, two pieces of the formed positive electrode plate and three pieces of the formed negative electrode plate that had been inserted in the bag-shaped separator were alternately laminated. Subsequently, the lug portions of the electrode plates having the same polarity were welded together by a cast-on strap (COS) method to fabricate a plate group. The plate group was inserted into the battery case, thereby assembling a 2 V single cell battery (rated capacity of 4.6 Ah). Into this battery, 80 ml of dilute sulfuric acid having a specific gravity of 1.280 was injected, thereby obtaining a flooded-type lead-acid battery.

### <Fabrication of valve-regulated lead-acid battery>

The formed positive electrode plate was sandwiched between AGM (Absorbent Glass Mat) separators having a thickness of 2.4 mm. Next, three pieces of the formed negative electrode plate and two pieces of the formed positive electrode plate sandwiched between AGM separators were alternately laminated. Subsequently, the lug portions of the electrode plates having the same polarity were welded together by a cast-on strap (COS) method to fabricate a plate group. The plate group was inserted into the battery case, thereby assembling a 2 V single cell battery (rated capacity of 4.6 Ah). Into this battery, 55 ml of dilute sulfuric acid having a specific gravity of 1.280 was injected, thereby obtaining a valve-regulated lead-acid battery.

### (Examples 2 to 5)

Lead-acid batteries were fabricated in the same manner as in Example 1 except that the contents of the aromatic ester compound and other negative electrode additives were changed to those presented in Table 1.

### (Comparative Example 1)

A lead-acid battery was fabricated in the same manner as in Example 1 except that an aromatic ester compound was not used in the preparation of the negative electrode material.

### (Examples 6 to 9)

Flooded-type lead-acid batteries and valve-regulated lead-acid batteries were fabricated using the same positive and negative electrode plates as those of Comparative Example 1. Benzyl benzoate was suspended in an electrolytic solution (sulfuric acid solution) with the content (% by volume) indicated in Table 2. Using the suspension as an electrolytic solution for formation, the positive and negative electrode plates were formed under the same condition as that of Comparative Example 1. Then, a battery was assembled, and a predetermined amount of electrolytic solution was injected into the assembled battery to obtain a completed battery. The injected electrolytic solution was also a suspension which contains benzyl benzoate with the content (% by volume) indicated in Table 2.

### <Evaluation on HRPSOC cycle characteristics>

For each of the flooded-type lead-acid batteries and the valve-regulated lead-acid batteries of Examples and Comparative Example, the HRPSOC (high rate PSOC) cycle characteristics simulating the use in micro hybrid were evaluated as follows. The results are presented in Table 1.

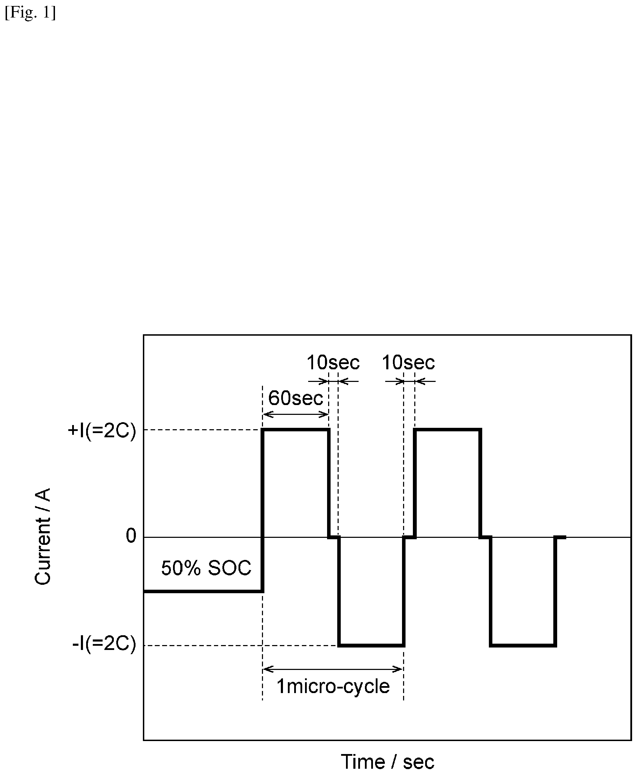

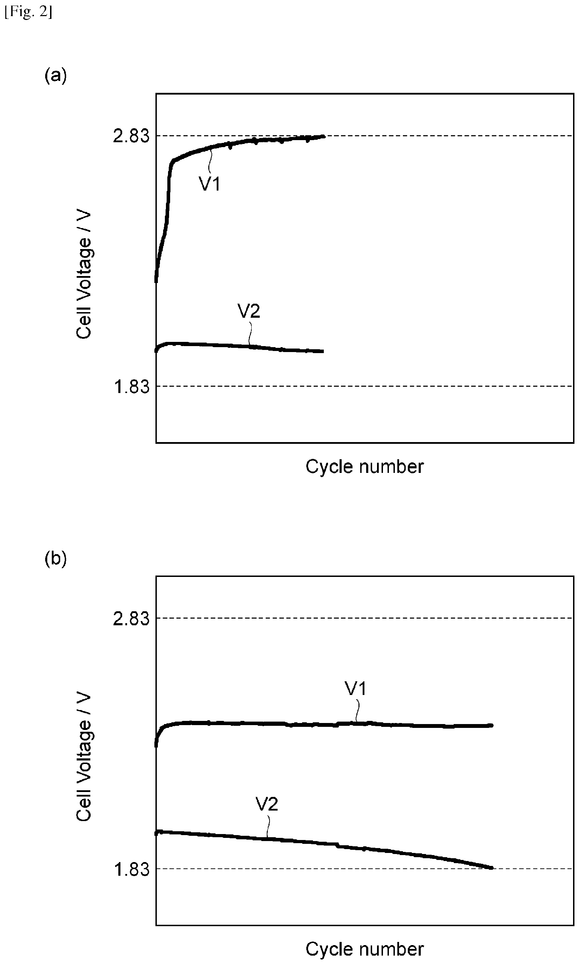

In an atmosphere of which the temperature was adjusted so that the battery temperature reached 25°C, the batteries were charged and discharged in the charge and discharge pattern of the HRPSOC cycle as illustrated in Fig. 1. In other words, first, discharge was conducted at a discharge rate of 1 C until the SOC reached 50%. Subsequently, constant current discharge was conducted at a current of 2 C for 60 seconds and then paused for 10 seconds. Subsequently, constant current charge was conducted at a current of 2 C for 60 seconds and then paused for 10 seconds in the same manner. This discharge and charge for 60 seconds for each was adopted as one micro cycle, this micro cycle was repeated, and the number of cycles until the charge voltage V1 reached 2.83 V (upper limit) or the battery voltage V2 at the final stage of discharge reached 1.83 V (lower limit) was measured as illustrated in Fig. 2 (a). The HRPSOC cycle characteristics were evaluated by this number of cycles.

**[Table 1]**

| | Negative electrode additive (% by mass) | | | | HRPSOC cycle characteristics | |
|---|---|---|---|---|---|---|
| | Benzyl Benzoate | BaSO₄ | Carbon black | partially desulfonated sodium lignosulfonate | Flooded-type lead-acid battery | Valve-regulated lead-acid battery |
| Example 1 | 0.3 | 0.4 | 0.4 | 0.2 | 15500 | 15500 |
| Example 2 | 0.4 | 0.4 | 0.4 | 0.2 | 12000 | 12000 |
| Example 3 | 0.2 | 0.4 | 0.4 | 0.2 | 12500 | 12500 |
| Example 4 | 0.3 | 0.4 | 0.4 | 0.3 | 15000 | 15000 |
| Example 5 | 0.3 | 0.4 | 0.4 | 0.4 | 14500 | 14500 |
| Comparative Example 1 | - | 0.4 | 0.4 | 0.2 | 5500 | 5500 |

**[Table 2]**

| | Electrolytic solution additive (% by volume) | HRPSOC cycle characteristics | |
|---|---|---|---|
| | Benzyl Benzoate | Flooded-type lead-acid battery | Valve-regulated lead-acid battery |
| Example 6 | 0.1 | 13500 | 15000 |
| Example 7 | 0.3 | 14000 | 16000 |
| Example 8 | 0.5 | 12500 | 14500 |
| Example 9 | 0.8 | 11500 | 13500 |
| Comparative Example 1 | - | 5500 | 5500 |

It can be seen that the flooded-type lead-acid batteries and the valve-regulated lead-acid batteries of Examples 1 to 5 in which an aromatic ester compound was used exhibit superior high-rate PSOC cycle characteristics as compared to the flooded-type lead-acid battery and the valve-regulated lead-acid battery of Comparative Example 1 in which an aromatic ester compound was not used.

The present invention specifically relates to the following embodiments:
(1) A negative electrode for a lead-acid battery, comprising:
   a negative electrode collector; and
   a negative electrode material comprising an aromatic ester compound.
(2) The negative electrode according to (1), wherein a content of the aromatic ester compound is 0.01 to 5.0 % by mass based on the total amount of the negative electrode material.
(3) The negative electrode according to (1) or (2), wherein the negative electrode material further comprises a carbon material.
(4) The negative electrode according to (3), wherein the carbon material is at least one selected from the group consisting of carbon blacks, graphites and active carbons.
(5) The negative electrode according to any one of (1) to (4), wherein the negative electrode material further comprises a resin having at least one group selected from the group consisting of sulfone groups and sulfonate groups.
(6) The negative electrode according to any one of (1) to (5), wherein the aromatic ester compound is at least one selected from the group consisting of benzyl benzoate and derivatives thereof.
(7) A lead-acid battery comprising the negative electrode according to any one of (1) to (6).
(8) A method for manufacturing a negative electrode for a lead-acid battery, comprising the step of filling a negative electrode collector with a negative electrode material comprising an aromatic ester compound.
(9) The method according to (8), wherein a content of the aromatic ester compound is 0.01 to 5.0 % by mass based on the total amount of the negative electrode material.
(10) The method according to (8) or (9), wherein the negative electrode material further comprises a carbon material.
(11) The method according to (10), wherein the carbon material is at least one selected from the group consisting of carbon blacks, graphites and active carbons.
(12) The method according to any one of (8) to (11), wherein the negative electrode material further comprises a resin having at least one group selected from the group consisting of sulfone groups and sulfonate groups.
(13) The method according to any one of (8) to (12), wherein the aromatic ester compound is at least one selected from the group consisting of benzyl benzoate and derivatives thereof.
(14) An additive for a negative electrode for a lead-acid battery, comprising an aromatic ester compound.
(15) Use of an aromatic ester compound for a negative electrode for a lead-acid battery.
(16) An electrolytic solution for a lead-acid battery, comprising:
   sulfuric acid; and
   an aromatic ester compound.
(17) The electrolytic solution according to (1), wherein a content of the aromatic ester compound is 0.01 to 5.0 % by volume based on the total amount of the electrolytic solution.
(18) The electrolytic solution according to (16) or (17), wherein the aromatic ester compound is at least one selected from the group consisting of benzyl benzoate and derivatives thereof.
(19) A lead-acid battery comprising the electrolytic solution according to any one of (16) to (18).
(20) A method for manufacturing an electrolytic solution for a lead-acid battery, comprising the step of adding an aromatic ester compound to sulfuric acid solution.
(21) The method according to (20), wherein a content of the aromatic ester compound is 0.01 to 5.0 % by volume based on the total amount of the electrolytic solution.
(22) The method according to (20) or (21), wherein the aromatic ester compound is at least one selected from the group consisting of benzyl benzoate and derivatives thereof.
(23) An additive for an electrolytic solution for a lead-acid battery, comprising an aromatic ester compound.
(24) Use of an aromatic ester compound for an electrolytic solution for a lead-acid battery.

## Claims

1. A negative electrode for a lead-acid battery, comprising:
a negative electrode collector; and
a negative electrode material comprising an aromatic ester compound.

2. The negative electrode according to claim 1, wherein a content of the aromatic ester compound is 0.01 to 5.0 % by mass based on the total amount of the negative electrode material.

3. The negative electrode according to claim 1 or 2, wherein the aromatic ester compound is at least one selected from the group consisting of benzyl benzoate and derivatives thereof.

4. A lead-acid battery comprising the negative electrode according to any one of claims 1 to 3.

5. A method for manufacturing a negative electrode for a lead-acid battery, comprising the step of filling a negative electrode collector with a negative electrode material comprising an aromatic ester compound.

6. The method according to claim 5, wherein a content of the aromatic ester compound is 0.01 to 5.0 % by mass based on the total amount of the negative electrode material.

7. The method according to claim 5 or 6, wherein the aromatic ester compound is at least one selected from the group consisting of benzyl benzoate and derivatives thereof.

8. An electrolytic solution for a lead-acid battery, comprising:
sulfuric acid; and
an aromatic ester compound.

9. The electrolytic solution according to claim 8, wherein a content of the aromatic ester compound is 0.01 to 5.0 % by volume based on the total amount of the electrolytic solution.

10. The electrolytic solution according to claim 8 or 9, wherein the aromatic ester compound is at least one selected from the group consisting of benzyl benzoate and derivatives thereof.

11. A lead-acid battery comprising the electrolytic solution according to any one of claims 8 to 10.

12. A method for manufacturing an electrolytic solution for a lead-acid battery, comprising the step of adding an aromatic ester compound to sulfuric acid solution.

13. The method according to claim 12, wherein a content of the aromatic ester compound is 0.01 to 5.0 % by volume based on the total amount of the electrolytic solution.

14. The method according to claim 12 or 13, wherein the aromatic ester compound is at least one selected from the group consisting of benzyl benzoate and derivatives thereof.

## Patentansprüche

1. Negative Elektrode für eine Blei-Säure-Batterie, umfassend:
einen negativen Elektrodenkollektor und
ein negatives Elektrodenmaterial, umfassend eine aromatische Esterverbindung.

2. Negative Elektrode gemäß Anspruch 1, wobei ein Gehalt der aromatischen Esterverbindung 0,01 bis 5,0 Masse-%, bezogen auf die Gesamtmenge des negativen Elektrodenmaterials, beträgt.

3. Negative Elektrode gemäß Anspruch 1 oder 2, wobei die aromatische Esterverbindung mindestens eine, ausgewählt aus der Gruppe, bestehend aus Benzylbenzoat und Derivaten davon, ist.

4. Blei-Säure-Batterie, umfassend die negative Elektrode gemäß irgendeinem der Ansprüche 1 bis 3.

5. Verfahren zur Herstellung einer negativen Elektrode für eine Blei-Säure-Batterie, umfassend den Schritt des Befüllens eines negativen Elektrodenkollektors mit einem negativen Elektrodenmaterial, umfassend eine aromatische Esterverbindung.

6. Verfahren gemäß Anspruch 5, wobei ein Gehalt der aromatischen Esterverbindung 0,01 bis 5,0 Masse-%, bezogen auf die Gesamtmenge des negativen Elektrodenmaterials, beträgt.

7. Verfahren gemäß Anspruch 5 oder 6, wobei die aromatische Esterverbindung mindestens eine, ausgewählt aus der Gruppe, bestehend aus Benzylbenzoat und Derivaten davon, ist.

8. Elektrolytische Lösung für eine Blei-Säure-Batterie, umfassend:
Schwefelsäure und
eine aromatische Esterverbindung.

9. Elektrolytische Lösung gemäß Anspruch 8, wobei ein Gehalt der aromatischen Esterverbindung 0,01 bis 5,0 Vol.-%, bezogen auf die Gesamtmenge der elektrolytischen Lösung, beträgt.

10. Elektrolytische Lösung gemäß Anspruch 8 oder 9, wobei die aromatische Esterverbindung mindestens eine, ausgewählt aus der Gruppe, bestehend aus Benzylbenzoat und Derivaten davon, ist.

11. Blei-Säure-Batterie, umfassend die elektrolytische Lösung gemäß irgendeinem der Ansprüche 8 bis 10.

12. Verfahren zur Herstellung einer elektrolytischen Lösung für eine Blei-Säure-Batterie, umfassend den Schritt des Zugebens einer aromatischen Esterverbindung zu Schwefelsäurelösung.

13. Verfahren gemäß Anspruch 12, wobei ein Gehalt der aromatischen Esterverbindung 0,01 bis 5,0 Vol.-%, bezogen auf die Gesamtmenge der elektrolytischen Lösung, beträgt.

14. Verfahren gemäß Anspruch 12 oder 13, wobei die aromatische Esterverbindung mindestens eine, ausgewählt aus der Gruppe, bestehend aus Benzylbenzoat und Derivaten davon, ist.

## Revendications

1. Électrode négative pour une batterie au plomb-acide, comprenant :
un collecteur d'électrode négative ; et
une matière d'électrode négative comprenant un composé d'ester aromatique.

2. Électrode négative selon la revendication 1, dans laquelle une teneur du composé d'ester aromatique est de 0,01 à 5,0% en masse sur la base de la quantité totale de la matière d'électrode négative.

3. Électrode négative selon la revendication 1 ou 2, dans laquelle le composé d'ester aromatique est au moins l'un sélectionné dans le groupe constitué par du benzoate de benzyle et des dérivés de ce dernier.

4. Batterie au plomb-acide comprenant l'électrode négative selon l'une quelconque des revendications 1 à 3.

5. Procédé pour fabriquer une électrode négative pour une batterie au plomb-acide, comprenant l'étape consistant à remplir un collecteur d'électrode négative d'une matière d'électrode négative comprenant un composé d'ester aromatique.

6. Procédé selon la revendication 5, dans lequel une teneur du composé d'ester aromatique est de 0,01 à 5,0 % en masse sur la base de la quantité totale de la matière d'électrode négative.

7. Procédé selon la revendication 5 ou 6, dans lequel le composé d'ester aromatique est au moins l'un sélectionné dans le groupe constitué par du benzoate de benzyle et des dérivés de ce dernier.

8. Solution électrolytique pour une batterie au plomb-acide, comprenant :
de l'acide sulfurique ; et
un composé d'ester aromatique.

9. Solution électrolytique selon la revendication 8, dans laquelle une teneur du composé d'ester aromatique est de 0,01 à 5,0% en volume sur la base de la quantité totale de la solution électrolytique.

10. Solution électrolytique selon la revendication 8 ou 9, dans laquelle le composé d'ester aromatique est au moins l'un sélectionné dans le groupe constitué par du benzoate de benzyle et des dérivés de ce dernier.

11. Batterie au plomb-acide comprenant la solution électrolytique selon l'une quelconque des revendications 8 à 10.

12. Procédé pour fabriquer une solution électrolytique pour une batterie au plomb-acide, comprenant l'étape consistant à ajouter un composé d'ester aromatique à la solution d'acide sulfurique.

13. Procédé selon la revendication 12, dans lequel une teneur du composé d'ester aromatique est de 0,01 à 5,0 % en volume sur la base de la quantité totale de la solution électrolytique.

14. Procédé selon la revendication 12 ou 13, dans lequel le composé d'ester aromatique est au moins l'un sélectionné dans le groupe constitué par du benzoate de benzyle et des dérivés de ce dernier.
